(19) Europäisches Patentamt / European Patent Office / Office européen des brevets

(11) **EP 2 081 659 B1**

(12) **EUROPEAN PATENT SPECIFICATION**

(45) Date of publication and mention of the grant of the patent:
**25.01.2012 Bulletin 2012/04**

(51) Int Cl.:
***B01D 15/22*** *(2006.01)*  ***G01N 30/60*** *(2006.01)*

(21) Application number: **07786120.1**

(22) Date of filing: **17.07.2007**

(86) International application number:
**PCT/EP2007/006320**

(87) International publication number:
**WO 2008/009412 (24.01.2008 Gazette 2008/04)**

(54) **AXIAL CHROMATOGRAPHY COLUMNS AND METHODS**

AXIALCHROMATOGRAPHIESÄULEN UND -VERFAHREN

COLONNES DE CHROMATOGRAPHIE AXIALES ET PROCÉDÉS ASSOCIÉS

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **19.07.2006 GB 0614316**

(43) Date of publication of application:
**29.07.2009 Bulletin 2009/31**

(73) Proprietor: **GE Healthcare Bio-Sciences AB 751 84 Uppsala (SE)**

(72) Inventors:
• **GEBAUER, Klaus**
  **S-751 84 Uppsala (SE)**
• **HERMANSSON, Dan**
  **S-751 84 Uppsala (SE)**
• **SVANBERG, Henrik**
  **S-752 18 Uppsala (SE)**

(74) Representative: **Stavbom, Ellen Elisabet et al**
  **GE Healthcare Bio-Sciences AB**
  **Patent Department**
  **Björkgatan 30**
  **751 84 Uppsala (SE)**

(56) References cited:
  **WO-A-2007/045491**    **US-A- 5 282 973**
  **US-A1- 2002 125 181**    **US-B1- 6 736 974**

**Description**

**Filed of Invention**

The present invention relates to axial chromatography columns and methods of separating one or more analytes present in a liquid from each other using such chromatography columns.

**Background of the Invention**

Chromatography is a well-established and valuable technique for separating chemical and biological substances and is widely used in research and industry, finding many applications in compound preparation, purification and analysis. There are many different forms of chromatography, liquid chromatography being of particular importance in the pharmaceutical and biological industries for the preparation; purification and analysis of proteins, peptides and nucleic acids.

A typical liquid chromatography apparatus has an upright housing in which a bed of packing material, which is usually particulate in nature and consists of a porous medium, rests against a permeable retaining layer. A liquid mobile phase enters through an inlet, for example at the top of the column, usually through a porous, perforated filter, mesh or frit, moves through the bed of packing material and is removed via an outlet, typically through a second filter, mesh or frit.

Columns used in liquid chromatography typically comprise a tubular body enclosing the porous chromatography medium through which the carrier liquid or mobile phase flows, with separation of substances or analytes taking place between the mobile phase and solid phase of the porous medium. Typically, the porous medium is enclosed in the column as a packed bed, generally formed by consolidating a suspension of discrete particles, known as slurry that is pumped, poured or sucked into the column, usually from a central bore or nozzle located at one end of the column. The production of a stable, even bed is critical to the final separation process and optimum results are found using bores which are centrally positioned through the column end.

Another critical feature in the separation of substances is the fluid distribution system, particularly as the cross-section of the chromatographic column increases. The efficiency of the chromatographic separation relies on the liquid distribution and collection system at the fluid inlet and outlet of the packed bed.

Ideally, the carrier liquid is uniformly introduced throughout the surface at the top of the packing, flows through the packing at the same velocity throughout the packing cross section, and is uniformly removed at the plane defined by the bottom of the packed bed.

Conventional distribution systems for use in liquid chromatography must address a number of inherent problems that have deleterious effects on the separation efficiency of the column. Among these problems is the non-uniform initial fluid distribution at the top of the packed bed. The problem of non-uniform initial fluid distribution refers generally to the problem of applying a sample volume simultaneously over the cross-sectional area of the packed bed. This problem will lead to increased dispersion in the chromatographic system by broadening the convective residence time distribution of a tracer substance transported with the fluid throughout the system. Without a simultaneous introduction of fluid in the plane defined by the top of the bed, it is virtually impossible to achieve so-called plug-flow behaviour, which is a uniform and well-defined movement of the sample through the packed bed and column, respectively, resulting in a uniform residence time distribution.

The dispersion generated by the liquid distribution system has to be controlled in relation to the amount of dispersion introduced by the chromatographic packed bed itself by means of diffusion and mixing effects.

Standard fluid distribution systems consist of one central inlet for the mobile phase in combination with a thin distribution channel (gap) behind the filter (mesh, woven net or sinter) confining the top and bottom plane of the inlet and outlet of the packed bed. In theory and from experience it is known that such a system deteriorates in performance with increasing diameter of the column. This is due to the residence time difference between fluid elements travelling from the inlet to the outer column wall and those fluid elements which directly can enter the filter or net and the packed bed region below the inlet port. This difference in residence time is enlarged with column diameter and leads to chromatographic band broadening which becomes most severe with small particles. This problem corresponds to the non-uniform initial fluid distribution.

Columns with multiple inlets have been proposed. Multiple inlets reduce the residence time differences but are expensive to produce.

Yet another technique is disclosed in US 4,537,217, which is comprised of a layered distribution structure, comprising a first layer that acts as a cover and in which a fluid inlet is formed, a second layer wherein a number of channels are formed which each terminates in an outlet extending through the second layer. As a further development of this technique, US 5,354,460 disposes the use of a large number of fan shaped "step-down nozzles", similar to the layered distribution structure presented above, that are arranged in concentric rings and interconnected by a manifold system. Due to the modular construction this system may be produced using large-scale production techniques, but the high grade of complexity still results in high production costs. Like the layered distribution structure, complex systems of this type are difficult to clean, thus increasing the risk of sanitary problems.

All the above systems employ central inlet systems for the mobile phase which are configured around the central inlet for the slurry. While this central configuration is critical for packing the column to obtain a uniform bed of medium, such a configuration imposes constraints on the design of the chromatography column, particularly in terms of its structure and cost.

Despite the high level of activity in the field of chromatography over many years, and the many distribution systems proposed for axial chromatography columns, both speculative as well as experimentally evaluated, the need still exists for an efficient, yet simple and cost-efficient column that will permit volumes in excess of 100 millilitres to be used. To date, no axial chromatography columns are available which meet this need.

Definitions

"Analyte" shall be defined as a substance, compound or chemical of natural or synthetic origin, or a reaction product or derivative or metabolite thereof. For the avoidance of doubt, the term shall include biological molecules, such as proteins, peptides, amino acids and nucleic acids, and synthetic molecules such as drugs and/or pro-drugs.

"Asymmetric" is a relative term and shall mean non-centric.

"Distribution channel" refers to structures through which fluids are introduced to an enclosure or bed space for a packed bed of chromatography medium from a cross-sectional zone.

A disposable column is characterized by a pre-treatment of the chromatography medium in order to reduce installation and qualification work otherwise required with non-disposable columns. As a minimum, the pre-treatment involves the formation of the bed of porous medium. Additional pre-treatment can be reduction of microbiological burden, sterilization, depyrogenation etc.

Disposable columns may be used as single-use columns, which means that the user is not performing cleaning regimes that require qualification (e.g. testing, validation, etc) of the packed bed before repeated use.

One embodiment of a disposable column is a complete column that is delivered pre-packed with chromatography medium.

Another embodiment of a disposable column consists of a first device representing a frame or vessel designed to resist pressure and load exerted on one or multiple lateral surfaces of the packed bed during operation in order to provide dimensional stability for a packed bed, and a second device, representing a container, shell, cartridge, bag or the like containing the porous medium or bed that is attached to the first device for operation. With the latter embodiment, the porous medium is contained in the secondary container and can be replaced while the frame is re-usable. In this case, the degree of compression of the porous medium required for operation may be adjusted after inserting the contained medium into the frame (see, for example US2002/0166816 and WO2005/009585).

"Level" shall be defined as a horizontal plane or specified height.

**Summary of the Invention**

The object of the invention is to provide a chromatography column which overcomes the drawbacks of the prior art systems.

One advantage with such a chromatography column is that it provides excellent distribution characteristics.

Another advantage is that the invention is easy and cheap to produce compared with existing columns.

A further advantage of the chromatography column is that it is easier to use than conventional columns.

The simplicity of the design comprising few interconnected elements is advantageous in that it reduces the requirement for the number of seals, hence decreasing the likelihood of leakage or contamination due to sanitary problems. These features are especially important for disposable columns comprising a reduction of microbiological burden during preparation (production) of the column, as well as to maintain those conditions during storage and shipping of the column.

Yet another advantage of the design employing the packing valve is that the packing/filling of the column can be performed as a closed system, which means that the column may even be filled/packed under aseptic conditions starting from a pre-sterilized column and pre-sterilized chromatography medium.

Still a further advantage is that the chromatography column is scalable (i.e. increasing or decreasing the column size leads to a predictable performance)

According to a first aspect of the present invention there is provided an axial flow chromatography column comprising:

a housing comprising a side wall;

opposed, axially spaced first and second end units separated by the side wall;

a transverse fluid distribution channel which is part of or adjacent to the first end unit;

a first filter which is adjacent to the transverse fluid distribution channel and a second filter which is adjacent to the second end unit wherein the filters together with the side wall define an enclosed bed space for containing a bed of particulate medium therein;

the first end unit comprising a valve means having a central bore which is in fluid communication with the enclosed bed space, the valve means comprising a longitudinal member extending through the first filter and the fluid distribution channel and having a passageway therein, the valve being operably openable and closable to allow filling of the bed space with the particulate medium through the passageway; and a first port for adding liquid to or removing liquid from the bed space;

the second end unit comprising a second port which is in fluid communication with the enclosed bed space to allow emptying or filling of the bed space with a liquid;

characterised in that the first port comprises an inlet and a single outlet having a passageway therebetween, the single outlet being in direct fluid connection with the fluid distribution channel and said outlet having an asymmetric configuration relative to the fluid distribution channel, and the first port is arranged such that it is not interconnected with the valve means structure.

In a second aspect of the invention, there is provided a method for separating one or more analytes in a liquid from each other, comprising applying the liquid containing the one or more analytes to an axial chromatography column as hereinbefore described, the column containing a bed of particulate medium therein, eluting the one or more analytes with a mobile phase, and collecting fractions of the mobile phase eluting from the column.

According to a third aspect of the invention, there is provided a method for performing a chemical or biochemical reaction between analytes in a liquid or between one or more analytes in a liquid and a substance attached to a particulate medium, comprising applying the liquid containing the one or more analytes to an axial chromatography column as hereinbefore described, said column containing a bed of said particulate medium therein. Thus, for example, the substance attached to the particulate medium may act as a catalyst to catalyse a reaction between the analytes in the liquid to produce a new analyte; alternatively, the substance may react directly with an analyte in the liquid to produce a new analyte. The resulting reaction products (or new analytes) can then be separated from reactants (i.e. the original analytes) on the column.

In a fourth aspect of the invention, there is provided a system for separating one or more analytes in a liquid from each other, the system comprising

an inlet or inlet manifold in fluid communication with the liquid;

a pump;

a chromatography column as hereinbefore described; and

an outlet or outlet manifold.

Embodiments of the invention are defined in the dependent claims.

**Brief Description of the Drawings**

Figure 1 is a schematic transverse sectional view of a chromatography column of the prior art showing the basic features thereof.

Figure 2 is a three dimensional schematic showing a transverse sectional view of a chromatography column according to the invention.

Figure 3 is an enlarged schematic transverse sectional view of an end plate of a chromatography column according to the invention detailing the asymmetric configuration of the port relative to the fluid distribution channel.

Figure 4 is a three-dimensional schematic of a chromatography column according to the invention.

Figure 5 is a transverse section of the column of Figure 4.

Figure 6 is a chromatogram showing the chromatographic separation of acetone on a chromatography column according to the invention, both in upflow (dotted line) and downflow (solid line) mode.

Figure 7 describes a method for calculating the reduced plate height and asymmetry factor from an eluted peak.

## Detailed Description of the Invention

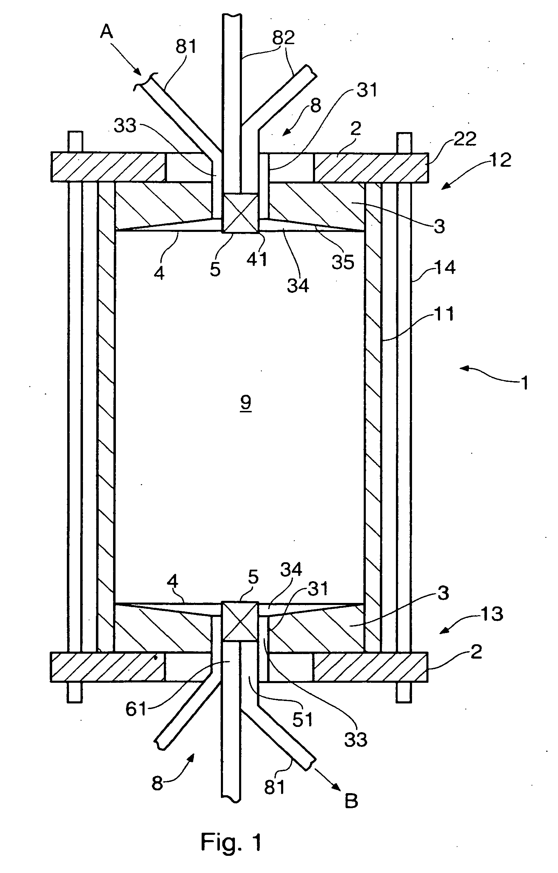

Figure 1 shows schematically the general components of a chromatography column 1 as known from the prior art (for example, see US 6,524,484). The column has a cylindrical fluid-impermeable side wall 11, e.g. of stainless steel or a high-strength/reinforced polymeric material which may be translucent. The open top and bottom ends of the side wall 11 are closed by top and bottom end assemblies or units 12, 13. Each end unit has a fluid-impermeable end plate 3 fitting sealingly to plug the opening of the cylindrical wall 11, and preferably made of stainless steel or high-strength engineering plastics material, e. g polypropylene. The end plates are backed up by metal retaining plates 2 bearing against their outer surfaces and projecting radially beyond the side wall as retaining flanges 22 through which tension rods 14 are secured. These link the top and end assemblies 12, 13 and help the construction to withstand high fluid pressures.

Each end plate 3 has a central through-opening 31 for communication between the exterior of the column and the packing bed space 9 defined by the side wall 11 and end assemblies 12, 13. Access through the opening 31 is subdivided into separate conduits, connected externally through a connection manifold 8.

A filter layer 4, typically of filtered or woven plastics or steel, extends across the area of the bed space 9 at the inner surface of the end plate 3. The inner surface 35 of the end plate 3 is recessed behind the filter layer 4, e.g. conically as illustrated, and preferably with the use of support ribs (not indicated) supporting the filter layer 4 from behind, to define between them a distribution channel 34. One of the communication conduits, a mobile phase conduit 33, opens inwardly into this distribution channel 34, as well as outwardly to a mobile phase connector 81 of the manifold 8.

From the manifold 8, an access valve device 5 projects inwardly through the end plate opening 31 and sealingly through a central orifice 41 of the filter layer 4. The access valve 5, governs the communication of one or more conduits from the manifold 8 directly to the bed space 9, i.e. bypassing the filter layer 4. Indicated here are first and second valved conduits 51, 61 governed by the valve 5, and connected externally through connectors 82 of the manifold 8.

In a typical operation of the column, a packed bed of particulate stationary phase material fills the bed space 9 between the top and bottom filter layers 4. The valve devices 5 being closed, a mobile phase is fed in through mobile phase connector 81 (arrow "A"), passes through conduit 33 into the distribution channel 34 and through the filter layer 4 to elute down through the packed bed, effecting separation of its components or analytes. Liquid eluate passes thought the filter layer 4 of the bottom end assembly 13 and out through the mobile phase connector 81 thereof (arrow "B") for collection as appropriate. While this is an example of "downflow" chromatography, in that chromatographic separation is effected by the downward movement of the mobile phase through the column, the skilled person will understand that separation may alternatively be achieved by "upflow" chromatography, simply by pumping mobile phase upwards through the column and thus reversing the direction of flow. In this mode, mobile phase would enter the column at connector 81 (arrow "B"), move upwards through the stationary phase or particulate medium, and be collected from connector 81 (arrow "A") at the top of the column.

Columns known from prior art that employ a central access valve as shown in Figure 1 are typically designed with a conduit (33) as passageway in between the mobile phase connection (81) and the liquid distribution channel (34), where said conduit (33) has the purpose of pre-distributing liquid symmetrically relative to the distribution channel (34). It is therefore designed such that the liquid is fed symmetrically into the distribution channel (34), which may be achieved by designing conduit (33) as an annulus around the central orifice (41) or as an arrangement of multiple bores or channels (for example, see US2002/0125181).

Figure 1 and the above explanation are to illustrate general relationships of components and a typical mode of operation. The skilled person will understand, and it will also appear from the following description, that other specific constructions and modes of operation may be appropriate for different kinds of processes.

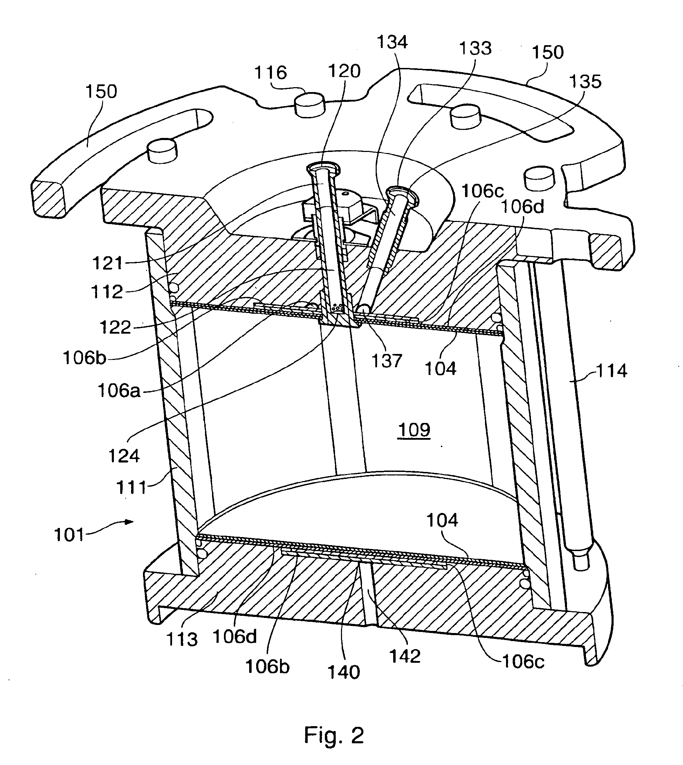

A schematic cross-sectional view of a column in accordance with the invention is shown in Figure 2. The column 101 comprises a tubular housing 111 which is secured to a first end unit 112 and a second end unit 113 by means of tension rods 114, thus defining a bed space 109. The housing 111 and end units 112, 113 are typically composed of stainless steel or a high-strength plastic material such as polypropylene. In a preferred embodiment, where the column is to be used for the separation of biologically active substances, the material is biologically inert such that it does not elicit an immune response in humans in accordance with United States Pharmacopia (USP) <88> Class VI. Tension rods 114, with heads 116, secure the end units 112, 113 to the side wall 111 to form a fluid-tight bed space 109 which is capable of withstanding high operating pressures.

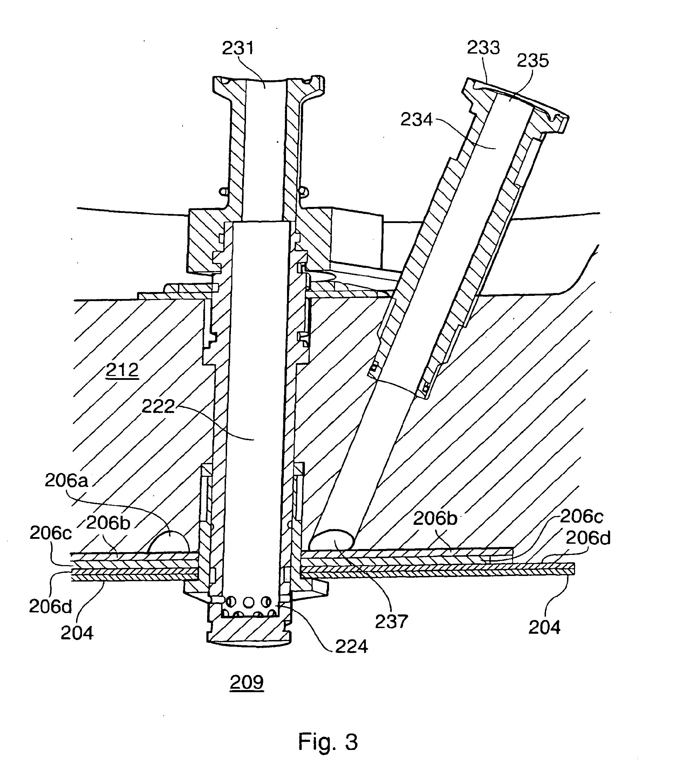

The column can be packed with particulate medium in the form of a slurry through valve means 120, the valve means 120 comprising a central bore (121) and a longitudinal member 122 having a passageway therein (not shown), and nozzle 124. In Figure 2 the nozzle 124 is shown in its retracted position but it will be understood that it can be moved to a position within the bed space 109 to facilitate filling of the column (see Figure 3). A wide range of nozzles can be used which facilitate the distribution and even packing of slurry within the bed space. One alternative for achieving an open/closed functionality at the packing valve and nozzle respectively is to have a nozzle that is fixed in the bed space (and thereby not retractable) and located adjacent to a movable element or sleeve on the inside or outside of the nozzle that opens and/or closes the nozzle depending on its position. Filters 104 are each positioned on the interior face of the end units 112, 113 and act with the side wall 111 to define the bed space 109 and also to prevent leakage of particulate medium from the bed space 109. A distribution channel 106 is located transversely across the face of the first end unit 112 and is in fluid communication with filter 104. The fluid distribution channel acts to facilitate radial distribution of the liquid.

In a simple form, the distribution channel 106 comprises a circumferential groove 106a in the face of the first end unit. The groove is positioned such that it effects the circumferential distribution of liquid emanating from outlet 137 of first port 133 uniformly around nozzle 124.

In another embodiment, the distribution channel also comprises a flat impermeable disc 106c which is sandwiched between a first 106b and second 106d net which are in fluid communication. The nets range in thickness from approximately 0.1 mm to 10 mm, the first net 106b preferably being thicker than the second net 106d. The nets act as spacers and define the height of the distribution channel. Suitable netting includes, for example, SEFAR® Propyltex 05-1000/45 and 05-2400/50 (SEFAR AG, Rushlikon, Switzerland).

In a different embodiment, the distribution channel comprises a ribbed plate which is adjacent to and in fluid communication with a fine net. The ribbing on the plate serves the same function as the netting described previously in defining the height of the distribution channel.

In yet another embodiment, the distribution channel comprises a perforated plate wherein one surface of the plate is dimpled. Once again, the dimpling acts as a spacer in defining the height of the distribution channel.

Thus the different embodiments of the distribution channel all serve to produce a similar three dimensional geometry and thereby achieve the same technical effect.

Mobile phase or liquid containing one or more analytes or substances for separation on the column is added via first port 133 which has an inlet 135, outlet 137 and a passageway 134 therebetween. The configuration of the first port 133 within the end unit 112 is such that it is positioned asymmetrically with respect to the fluid distribution channel 106; in the diagram, both inlet 135, where mobile phase or liquid is taken up into the column, and outlet 137 where it exits onto the distribution channel 106, are shown to have such an asymetric configuration. However, the skilled person will realise that the essential feature of the present invention is the asymmetric configuration of outlet 137 relative to the fluid distribution channel. Moreover the first port 133 is not interconnected with the valve means 120.

Mobile phase exiting the outlet 137 into the bed space 109 will be distributed evenly across the distribution channel 106, pass through filter 104 and then be eluted uniformly through the bed of particulate medium. The mobile phase will finally exit the column through second port 140. The asymmetric configuration of outlet 137 relative to the distribution channel 106 simplifies the design requirements in producing end unit 112 and thus reduces manufacturing costs.

It will be understood by the skilled person that the column may be operated in either a "downflow" mode, as described above, or in an "upflow" mode where the direction of flow of the mobile phase is reversed such that it moves up the column. In upflow mode, mobile phase will enter the column via second port 140, move upwards through the bed of particulate medium, and exit the column and be collected via first port port 133.

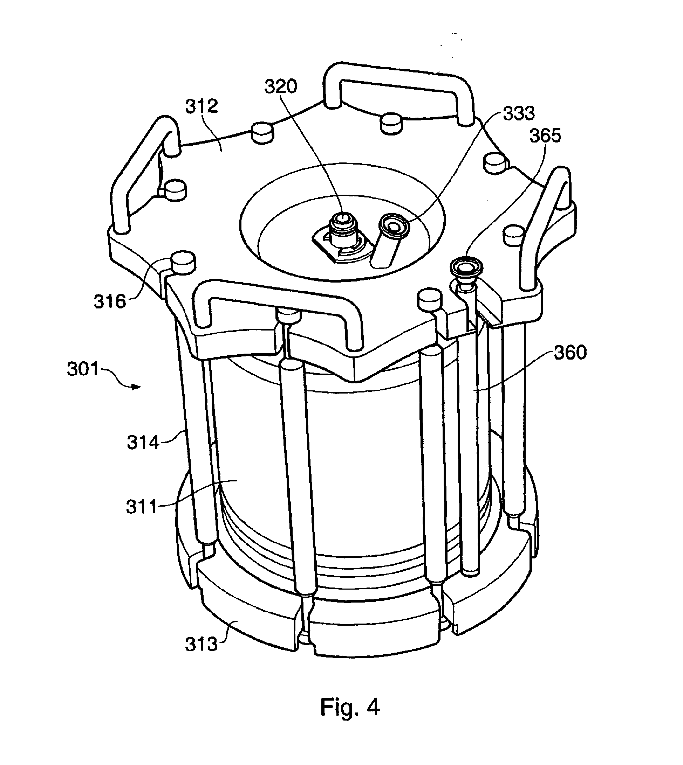

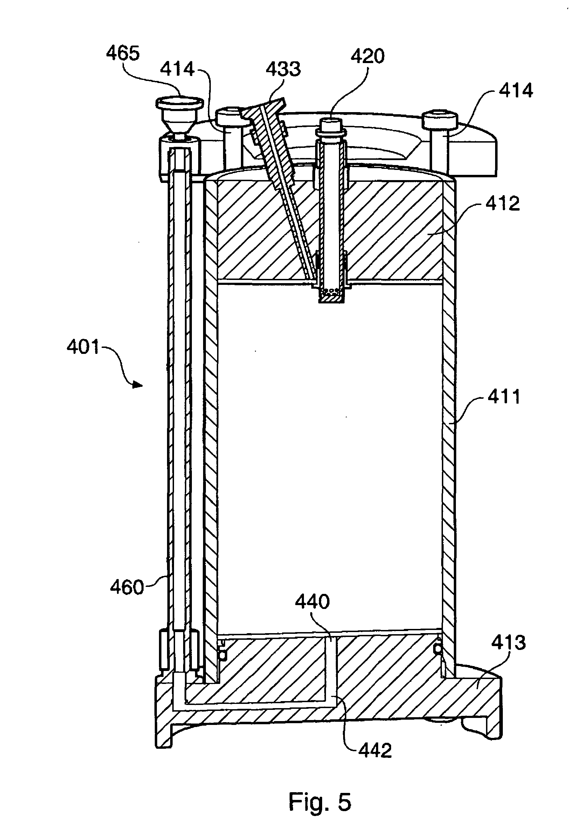

In the diagram shown, second port 140 comprises a passageway 142 which extends vertically through end unit 113 and exits on the opposing, exterior face of the unit. In another embodiment (not shown) the second port 140 exits through a lateral face of unit 113; this configuration allows, by means of appropriate connectors or hollow members (not shown), the collection of mobile phase/liquid at the same elevation as that at which it is applied to the column (i.e. at end unit 112; see for example Figures 4 or 5). The application and collection of mobile phase at the same elevation on a single end unit simplifies use, in terms of operator access and handling, reduces the risk of air accessing the system and decreases the space necessary to set up the column.

Handles 150 facilitate lifting and manipulation of the column.

It will be understood that a wide range of column capacities is possible, typically ranging from 0.1 to 2000 litres. Preferred capacities when using the column as a disposable column are in the range of 0.5 to 50 litres.

Figure 3 is an enlarged transverse sectional view of the end plate 212 of a chromatography column according to the invention (as shown in Figure 2) which shows the inlet 235 and details the asymmetric configuration of the outlet 237 of port 233 relative to the fluid distribution channel 206. The central position of the valve means 231, relative to the fluid distribution channel 206, is shown in Figure 3. As can be seen, nozzle 224 has been lowered into bed space 209 in order that the bed space 209 can be filled with particulate medium in the form of a slurry. It will be understood that the nozzle 224 will be retracted into the body of the longitudinal member 222 once the column has been packed with the particulate medium and prior to any chromatographic separation on the column. A bed of packed particulate medium is obtained by conventional means well known in the art, for example by the movement of one of the end units to compress the bed.

A liquid which contains one or more analytes to be separated is introduced onto the column via inlet 235 of first port 233, via passageway 234 and outlet 237. In the embodiment shown, the fluid distribution channel 206 comprises a circumferential groove 206a, and a flat impermeable disc 206c which is sandwiched between a first 206b and second 206d net which are in fluid communication. The elements effect a radial distribution of liquid across the surface of the particulate medium (not shown) adjacent to filter 204. The liquid then passes through filter 204 into the bed space 209 that is packed with particulate medium (not shown).

Chromatographic separation of analyte(s) which has been introduced onto the particulate medium in this manner is effected by introduction and elution by mobile phase. The mobile phase is added to the column in the same way as as described for the liquid above (i.e. via inlet 235 of port 233 and thence, from outlet 237 through distribution channel 206 and filter 204, into the bed space 209). The resulting fractions of mobile phase are collected as described in Figure 2 above.

As described in relation to Figure 2 above, it will be understood that the column exemplified in Figure 3 may also be operated in an upflow mode, with mobile phase entering the column at the second port (not shown), moving upwards through the column and being collected from first port 233.

A three dimensional schematic representation of another embodiment of a chromatographic column 301 in accordance with the present invention is shown in Figure 4. The external features of the column are clearly seen from the figure. The column comprises a first end unit 312, second end unit 313 and housing 311 which are secured together to form a fluid-tight seal by tension rods 314 and heads 316. Particulate medium in the form of a slurry can be introduced into the bed space (not shown) via valve means 320. First port 333 serves as a conduit for mobile phase or liquid containing analyte(s) to be separated on the particulate medium. Hollow member 360, which is in fluid communication with a second port (not shown) for the mobile phase from the bed space, ends in third port 365 from which appropriate fractions of mobile phase eluted from the column may be collected. As can be seen, third port 365 is at the same level or elevation as the first port 333 through which mobile phase is introduced. This arrangement facilitates user operation and sample handling. In the embodiment shown in Figure 4, the capacity of the column is approximately 10 litres; it will be understood that a wide range of column capacities are possible, typically ranging from 0.1 to 2000 litres. Preferred capacities when using the column as a disposable column are in the range of 0.5 to 50 litres.

Figure 5 shows a transverse sectional view of the column of Figure 4. The column 401 comprises a tubular housing 411, a first end unit 412 (partially shown) and second end unit 413, secured together to form a fluid tight seal by means of tension rods 414. Valve means 420 and first port 433 are shown in the figure. The second port 440 comprises a passageway 442 which extends through second end unit 413 to, and is in fluid communication with (via hollow member 460), a third port 465 from which liquid can be added or collected. As is evident from the figure, the third port 465 is at essentially the same level or elevation as the first port 433, thus facilitating the addition and collection of mobile phase to/from the column. This arrangement has further advantages in that it assists in the installation of the column, decreases the risk of syphoning, and reduces the iikeiihood of introduction of air into the column.

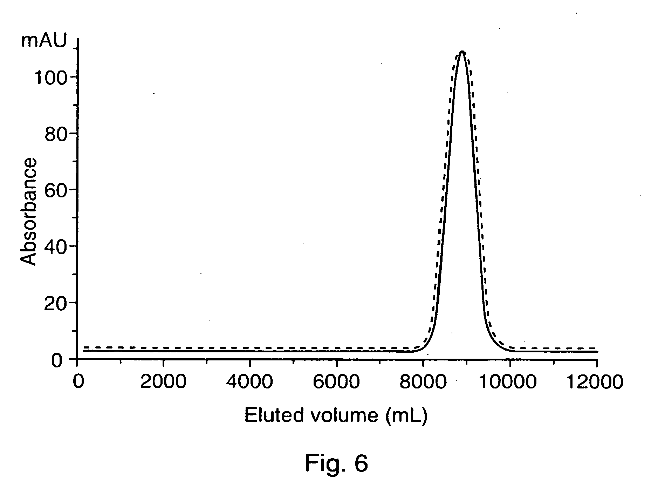

Figure 6 shows the chromatographic separation efficiency by example of a tracer pulse experiment achieved on a 10 litre column in accordance with the invention, operated in both downflow (solid line) and upflow (dotted line) mode. The column was packed with a bed of Capto™ Q anion exchange resin (GE Healthcare, Uppsala, Sweden) of 85$\mu$m agarose particle diameter. The column had a volume of 10.8 1, a diameter of 263 mm and a bed height of 200 mm. Acetone (1% of packed bed volume) was used as a tracer substance and eluted from the column using water as mobile phase and the absorbance monitored at 280 nm. As can be seen from Table 1 below, excellent column efficiency was observed with the 85$\mu$m agarose medium used, either in downflow (solid line) or upflow (dotted line) mode.

Table 1

|  | Observed | Acceptance |
|---|---|---|
| Plates/meter (N/m) | 4430 | >3700 (for 85$\mu$m) |
| Reduced plate height (h) | 2.5 | <3.0 |
| Peak asymmetry (Af) | 1.14 | 0.8-1.8 |

The data from Table 1 were derived from the chromatogram of Figure 6 as described below.

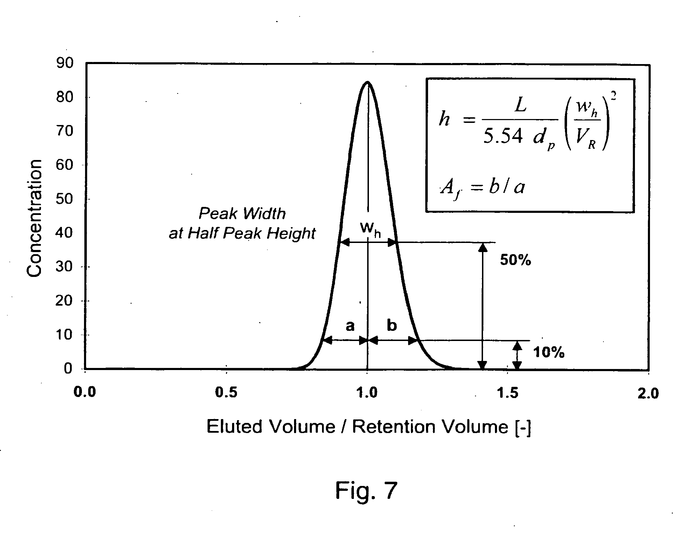

As a measure for column efficiency, the reduced plate height is determined with help of the peak width $w_h$ at half the height of the eluted peak, as shown in Figure 7. This procedure is an approximation valid for the gaussian-shaped. In practice, eluted peaks often deviate from this ideal gaussian shape and peak skewness is described qualitatively by a so-called asymmetry factor $A_f$, where 'leading' in the RTD is indicated by $A_f < 1$ and 'tailing' by $A_f > 1$. Commonly applied acceptance criteria for the asymmetry factor are $0.8 < A_f < 1.5$-$1.8$, depending on the type of application.

$$h = \frac{HETP}{d_P} = \frac{L}{d_p}\frac{1}{5.54}\left(\frac{w_h}{V_R}\right)^2$$

$$A_f = b/a \qquad\qquad \text{(see Figure 7)}$$

As a rule of thumb, the characteristic dispersion of the medium typically gives a reduced plate height in the range h=1.5-2.0 at an optimised superficial velocity when considering the highly porous media used for protein chromatography in biotechnological downstream processing. The ideal efficiency of the medium has to be compared to the experimentally determined efficiency of the chromatographic system, where an increase in the reduced plate height is a result of additional dispersion from peripherals, sample volume, bed heterogeneities and distribution system. In practice, a typical standard installation qualification of a chromatographic unit used in ion exchange separations of proteins is an experimentally determined reduced plate height of $h_{Unit,Apparent} < 3.0$.

| | |
|---|---|
| $A_f$ | asymmetry factor |
| $d_p$ | particle diameter |
| h | reduced plate height |
| HETP | height equivalent of a theoretical plate |
| L | bed height, packed bed |
| $u_s$ | superficial velocity in packed bed |
| $V_R$ | retention volume |
| $w_h$ | peak width at 50% of max. peak height |

**Claims**

**1.** An axial flow chromatography column (101; 301; 401) comprising
a housing comprising a side wall;
opposed, axially spaced first (112; 212; 312; 412) and second (113; 313; 413) end units separated by said side wall;
a transverse fluid distribution channel (106; 206) which is part of or adjacent to said first end unit (112; 212; 312; 412);
a first filter (104; 204) which is adjacent to said transverse fluid distribution channel (106; 206) and a second filter (104; 204) which is adjacent to the second end unit (113; 313; 413), wherein said filters together with the side wall define an enclosed bed space (109; 209) for containing a bed of particulate medium therein;
the first end unit (112; 212; 312; 412) comprising:

a centrally relative to the fluid distribution channel (106, 206),
positioned valve means (120; 231; 320; 420) having a central bore (121), which is in fluid communication with said enclosed bed space (109; 209), the valve means (120; 231; 320; 420) comprising a longitudinal member (122; 222) extending through said first filter (104; 204) and said fluid distribution channel (106; 206) and having a passageway therein, the valve being operably openable and closable to allow filling of the bed space (109; 209) with the particulate medium through said passageway; and
a first port (133; 233; 333; 433) for adding liquid to or removing liquid from the bed space (109; 209);

said second end unit (113; 313; 413) comprising a second port (140; 440) which is in fluid communication with the enclosed bed space (109; 209) to allow emptying or filling of the bed space with a liquid;
**characterised in that** said first port (133; 233; 333; 433) comprises an inlet (135; 235) and a single outlet (137; 237) having a passageway (134; 234) therebetween, said single outlet being (137; 237) in direct fluid connection with the fluid distribution channel (106; 206) and said outlet (137; 237) having an asymmetric configuration relative to the fluid distribution channel (106; 206), wherein the first port (133; 233; 333; 433) is arranged such that it is not interconnected with the valve means structure (120; 231; 320; 420).

2. The chromatography column (101; 301; 401) according to claim 1, wherein said fluid distribution channel (106; 206) comprises a circumferential groove (1 06a; 206a).

3. The chromatography column (101; 301; 401) of claim 1 or 2, wherein the fluid distribution channel (106; 206) additionally comprises a planar disc (106c; 206c).

4. The chromatography column (101; 301; 401) of claim 1, 2 or 3, wherein the fluid distribution channel (106; 206) additionally comprises a net (106b; 106d; 206b; 206d).

5. The chromatography column (101; 301; 401) of claim 1, 2 or 3, wherein said fluid distribution channel (106; 206) comprises a ribbed plate.

6. The chromatography column (101; 301; 401) of claim 1, 2, 3 or 4, wherein the fluid distribution channel (106; 206) comprises a perforated plate wherein one surface of said plate is dimpled.

7. The chromatography column (101; 301; 401) according to any preceding claim, wherein said second end unit (113; 313; 413) comprises a transverse fluid distribution channel.

8. The chromatography column (101; 301; 401) of claim 7, wherein said transverse fluid distribution channel of the second end unit (113; 313; 413) is a fluid distribution channel as defined in any of claims 2 to 7.

9. The chromatography column (101; 301; 401) of any preceding claim, wherein said longitudinal member (122; 222) of said valve means (120; 231; 320; 420) comprises a nozzle (124; 224).

10. The chromatography column (101; 301; 401) of claims 9, wherein said nozzle (124; 224) is retractable to a position outwith the bed space (109; 209).

11. The chromatography column (101; 301; 401) according to any preceding claim, wherein said column is pre-packed with particulate medium.

12. The chromatography column (101; 301; 401) according to claim 12 wherein said column is a disposable column.

13. The chromatography column (101; 301; 401) of any preceding claim, additionally comprising a hollow member (460) which is in fluid communication with the second port (440), said member having a third port (465) therein for the collection or addition of liquid.

14. The chromatography column (101; 301; 401) according to claim 13, wherein the first port and the third port are at essentially the same level or elevation above the level of the bed space on said chromatography column.

15. A method for separating one or more analytes in a liquid from each other, comprising applying said liquid containing said one or more analytes to an axial chromatography column (101; 301; 401) according to any of claims 1 to 14, said column containing a bed of particulate medium therein, eluting said one or more analytes with a mobile phase, and collecting fractions of said mobile phase eluting from the column.

16. A method for performing a chemical or biochemical reaction between analytes in a liquid or between one or more analytes in a liquid and a substance attached to a particulate medium, comprising applying said liquid containing said one or more analytes to an axial chromatography column (101; 301; 401) according to any of claims 1 to 14, said column containing a bed of said particulate medium therein.

17. A system for separating one or more analytes in a liquid from each other, said system comprising
an inlet or inlet manifold in fluid communication with said liquid;
a pump;
a chromatography column (101; 301; 401) according to any of claims 1 to 14; and
an outlet or outlet manifold.

**Patentansprüche**

1. Axialflusschromatographiesäule (101; 301; 401), umfassend
   ein eine Seitenwand umfassendes Gehäuse;
   gegenüberliegende, axial beabstandete erste (112; 212; 312; 412) und zweite (113; 313; 413) Endeinheiten, die durch die Seitenwand getrennt sind;
   einen quer verlaufenden Fluidverteilungskanal (106; 206), der Teil von oder benachbart zu der ersten Endeinheit (112; 212; 312; 412) ist;
   ein erstes Filter (104; 204), das benachbart zu dem quer verlaufenden Fluidverteilungskanal (106; 206) ist, und ein zweites Filter (104; 204), das benachbart zu der zweiten Endeinheit (113; 313; 413) ist, wobei die Filter gemeinsam mit der Seitenwand einen umschlossenen Bettraum (109; 209) zum Aufnehmen eines Betts aus Partikelmedium darin festlegen;
   die erste Endeinheit (112; 212; 312; 412) umfassend:

   ein zentral in Bezug auf den Fluidverteilungskanal (106; 206) positioniertes Ventilmittel (120; 231; 320; 420) mit einer zentralen Bohrung (121), die in fluider Kommunikation mit dem umschlossenen Bettraum (109; 209) ist, wobei das Ventilmittel (120; 231; 320; 420) ein Längsteil (122; 222) umfasst, das sich durch das erste Filter (104; 204) und den Fluidverteilungskanal (106; 206) erstreckt und eine Passage in demselben aufweist, wobei das Ventil betätigbar öffenbar und verschließbar ist, um das Füllen des Bettraums (109; 209) mit dem Partikelmedium durch die Passage zu ermöglichen; und
   einen ersten Anschluss (133; 233; 333; 433) zum Hinzugeben von Flüssigkeit zu oder zum Entfernen von Flüssigkeit aus dem Bettraum (109; 209);
   die zweite Endeinheit (113; 313; 413) umfassend einen zweiten Anschluss (140; 440), der in fluider Kommunikation mit dem umschlossenen Bettraum (109; 209) ist, um das Leeren oder das Füllen des Bettraums mit einer Flüssigkeit zu ermöglichen;

   **dadurch gekennzeichnet, dass** der erste Anschluss (133; 233; 333; 433) einen Einlass (135; 235) und einen einzigen Auslass (137; 237) mit einer Passage (134; 234) dazwischen umfasst, wobei der einzige Auslass (137; 237) in direkter fluider Verbindung mit dem Fluidverteilungskanal (106; 206) ist und der Auslass (137; 237) eine asymmetrische Anordnung in Bezug auf den Fluidverteilungskanal (106; 206) hat, wobei der erste Anschluss (133; 233; 333; 433) so angeordnet ist, dass er nicht mit der Ventilmittelstruktur (120; 231; 320; 420) verbunden ist.

2. Chromatographiesäule (101; 301; 401) nach Anspruch 1, wobei der Fluidverteilungskanal (106; 206) eine umlaufende Kehlung (106a; 206a) umfasst.

3. Chromatographiesäule (101; 301; 401) nach Anspruch 1 oder 2, wobei der Fluidverteilungskanal (106; 206) zusätzlich eine plane Scheibe (106c; 206c) umfasst.

4. Chromatographiesäule (101; 301; 401) nach Anspruch 1, 2 oder 3, wobei der Fluidverteilungskanal (106; 206) zusätzlich ein Netz (106b; 106d; 206b; 206d) umfasst.

5. Chromatographiesäule (101; 301; 401) nach Anspruch 1, 2 oder 3, wobei der Fluidverteilungskanal (106; 206) eine gerippte Platte umfasst.

6. Chromatographiesäule (101; 301; 401) nach Anspruch 1, 2, 3 oder 4, wobei der Fluidverteilungskanal (106; 206) eine gelochte Platte umfasst, wobei eine Fläche der Platte mit Vertiefungen versehen ist.

7. Chromatographiesäule (101; 301; 401) nach einem der vorstehenden Ansprüche, wobei die zweite Endeinheit (113; 313; 413) einen quer verlaufenden Fluidverteilungskanal umfasst.

8. Chromatographiesäule (101; 301; 401) nach Anspruch 7, wobei der quer verlaufende Fluidverteilungskanal der zweiten Endeinheit (113; 313; 413) ein Fluidverteilungskanal ist wie in einem der Ansprüche 2 bis 7 definiert.

9. Chromatographiesäule (101; 301; 401) nach einem der vorstehenden Ansprüche, wobei das Längsteil (122; 222) des Ventilmittels (120; 231; 320; 420) eine Düse (124; 224) umfasst.

10. Chromatographiesäule (101; 301; 401) nach Anspruch 9, wobei die Düse (124; 224) zu einer Position außerhalb des Bettraums (109; 209) zurückziehbar ist.

**11.** Chromatographiesäule (101; 301; 401) nach einem der vorstehenden Ansprüche, wobei die Säule mit Partikelmedium vorgepackt ist.

**12.** Chromatographiesäule (101; 301; 401) nach Anspruch 11, wobei die Säule eine Einwegsäule ist.

**13.** Chromatographiesäule (101; 301; 401) nach einem der vorstehenden Ansprüche, die zusätzlich ein Hohlteil (460) umfasst, das in fluider Kommunikation mit dem zweiten Anschluss (440) ist, wobei das Teil einen dritten Anschluss (465) in demselben hat zwecks Auffangens oder Zugabe von Flüssigkeit.

**14.** Chromatographiesäule (101; 301; 401) nach Anspruch 13, wobei der erste Anschluss und der dritte Anschluss auf im Wesentlichen dem gleichen Niveau oder der gleichen Höhe über dem Niveau des Bettraums auf der Chromatographiesäule liegen.

**15.** Verfahren zum Trennen eines oder mehrerer Analyten in einer Flüssigkeit voneinander, umfassend das Anwenden der Flüssigkeit, die den einen oder die mehreren Analyten enthält, auf eine Axialchromatographiesäule (101; 301; 401) nach einem der Ansprüche 1 bis 14, wobei die Säule ein Bett aus Partikelmedium in derselben enthält, das Eluieren des einen oder der mehreren Analyten mit einer mobilen Phasen, und das Auffangen von Fraktionen der mobilen Phase, die sich aus der Säule lösen.

**16.** Verfahren zur Durchführung einer chemischen oder biochemischen Reaktion zwischen Analyten in einer Flüssigkeit oder zwischen einem oder mehreren Analyten in einer Flüssigkeit und einer Substanz, die an ein Partikelmedium gebunden ist, umfassend das Anwenden der Flüssigkeit, die den einen oder die mehreren Analyten enthält, auf eine Axialchromatgraphiesäule (101; 301; 401) nach einem der Ansprüche 1 bis 14, wobei die Säule ein Bett aus dem Partikelmedium in derselben enthält.

**17.** System zum Trennen eines oder mehrerer Analyten in einer Flüssigkeit voneinander, wobei das System umfasst einen Einlass oder Einlassverteiler in fluider Kommunikation mit der Flüssigkeit; eine Pumpe; eine Chromatographiesäule (101; 301; 401) nach einem der Ansprüche 1 bis 14; und einen Auslass oder Auslassverteiler.

## Revendications

**1.** Colonne de chromatographie à flux axial (101 ; 301 ; 401) comprenant
un logement comprenant une paroi latérale ;
des première (112 ; 212 ; 312 ; 412) et seconde (113 ; 313 ; 413) unités d'extrémité opposées, espacées axialement, séparées par ladite paroi latérale ;
un canal de distribution de fluide transversal (106 ; 206) qui forme une partie de ladite première unité d'extrémité (112 ; 212 ; 312 ; 412) ou est adjacent à celle-ci ;
un premier filtre (104 ; 204) qui est adjacent audit canal de distribution de fluide transversal (106 ; 206) et un second filtre (104 ; 204) qui est adjacent à la seconde unité d'extrémité (113 ; 313 ; 413), dans laquelle lesdits filtres, ensemble avec la paroi latérale, définissent un espace de lit fermé (109 ; 209) afin de contenir à l'intérieur un lit d'un milieu particulaire ,
la première unité d'extrémité (112 ; 212 ; 312 ; 412) comprenant :

un moyen formant vanne (120 ; 231 ; 320 ; 420) positionné de manière centrale par rapport au canal de distribution de fluide (106, 206), comportant un orifice central (121) qui est en communication fluidique avec ledit espace de lit fermé (109 ; 209), le moyen formant vanne (120 ; 231 ; 320 ; 420) comprenant un élément longitudinal (122 ; 222) s'étendant à travers ledit premier filtre (104 ; 204) et ledit canal de distribution de fluide (106 ; 206) et présentant une voie de passage à l'intérieur, la vanne pouvant être ouverte et fermée de manière opérationnelle afin de permettre le remplissage de l'espace de lit (109 ; 209) avec le milieu particulaire à travers ladite voie de passage ; et
un premier orifice d'interface (133 ; 233 ; 333 ; 433) destiné à ajouter du liquide ou à retirer du liquide de l'espace de lit (109 ; 209) ;
ladite seconde unité d'extrémité (113 ; 313 ; 413) comprenant un deuxième orifice d'interface (140 ; 440) qui est en communication fluidique avec l'espace de lit fermé (109 ; 209) afin de permettre le vidage ou le remplissage de l'espace de lit par un liquide ;

**caractérisée en ce que** ledit premier orifice d'interface (133 ; 233 ; 333 ; 433) comprend une entrée (135 ; 235) et une sortie unique (137 ; 237) présentant une voie de passage (134 ; 234) entre les deux, ladite sortie unique (137 ; 237) étant en liaison fluidique directe avec le canal de distribution de fluide (106 ; 206) et ladite sortie (137 ; 237) présentant une configuration asymétrique par rapport au canal de distribution de fluide (106 ; 206), dans laquelle le premier orifice d'interface (133 ; 233 ; 333 ; 433) est agencé de telle sorte qu'il n'est pas interconnecté avec la structure de moyen formant vanne (120 ; 231 ; 320 ; 420).

2. Colonne de chromatographie (101 ; 301 ; 401) selon la revendication 1, dans laquelle ledit canal de distribution de fluide (106 ; 206) comprend une rainure circonférentielle (106a ; 206a).

3. Colonne de chromatographie (101 ; 301 ; 401) selon la revendication 1 ou 2, dans laquelle le canal de distribution de fluide (106 ; 206) comprend, en outre, un disque plan (106c ; 206c).

4. Colonne de chromatographie (101 ; 301 ; 401) selon la revendication 1, 2 ou 3, dans laquelle le canal de distribution de fluide (106 ; 206) comprend, en outre, un filet (106b ; 106d ; 206b ; 206d).

5. Colonne de chromatographie (101 ; 301 ; 401) selon la revendication 1, 2 ou 3, dans laquelle ledit canal de distribution de fluide (106 ; 206) comprend une plaque nervurée.

6. Colonne de chromatographie (101 ; 301 ; 401) selon la revendication 1, 2, 3 ou 4, dans laquelle le canal de distribution de fluide (106 ; 206) comprend une plaque perforée dans laquelle une surface de ladite plaque est plissée.

7. Colonne de chromatographie (101 ; 301 ; 401) selon l'une quelconque des revendications précédentes, dans laquelle ladite seconde unité d'extrémité (113 ; 313 ; 413) comprend un canal de distribution de fluide transversal.

8. Colonne de chromatographie (101 ; 301 ; 401) selon la revendication 7, dans laquelle ledit canal de distribution de fluide transversal de la seconde unité d'extrémité (113 ; 313 ; 413) est un canal de distribution de fluide selon l'une quelconque des revendications 2 à 7.

9. Colonne de chromatographie (101 ; 301 ; 401) selon l'une quelconque des revendications précédentes, dans laquelle ledit élément longitudinal (122 ; 222) dudit moyen formant vanne (120 ; 231 ; 320 ; 420) comprend un injecteur (124 ; 224).

10. Colonne de chromatographie (101 ; 301 ; 401) selon la revendication 9, dans laquelle ledit injecteur (124; 224) peut être rétracté vers une position à l'extérieur de l'espace de lit (109 ; 209).

11. Colonne de chromatographie (101 ; 301 ; 401) selon l'une quelconque des revendications précédentes, dans laquelle ladite colonne est préalablement compactée avec un milieu particulaire.

12. Colonne de chromatographie (101 ; 301 ; 401) selon la revendication 12 (11), dans laquelle ladite colonne est une colonne jetable.

13. Colonne de chromatographie (101 ; 301 ; 401) selon l'une quelconque des revendications précédentes, comprenant, en outre, un élément creux (460) qui est en communication fluidique avec le deuxième orifice d'interface (440), un troisième orifice d'interface (465) étant présent sur ledit élément afin de collecter ou d'ajouter du liquide.

14. Colonne de chromatographie (101 ; 301 ; 401) selon la revendication 13, dans laquelle le premier orifice et le troisième orifice sont sensiblement au même niveau ou élévation au-dessus du niveau de l'espace de lit sur ladite colonne de chromatographie.

15. Procédé de séparation d'un ou plusieurs analytes l'un de l'autre à partir d'un liquide, comprenant l'application dudit liquide contenant un ou plusieurs analytes sur une colonne de chromatographie axiale (101 ; 301 ; 401) selon l'une quelconque des revendications 1 à 14, un lit d'un milieu particulaire étant contenu à l'intérieur de ladite colonne, l'élution desdits un ou plusieurs analytes avec une phase mobile, et la collecte de fractions de ladite phase mobile éluée de la colonne.

16. Procédé de mise en oeuvre d'une réaction chimique ou biochimique entre des analytes dans un liquide ou entre un ou plusieurs analytes dans un liquide et une substance liée sur un support particulaire, comprenant l'application dudit liquide contenant un ou plusieurs analytes sur une colonne de chromatographie axiale (101 ; 301 ; 401) selon l'une quelconque des revendications 1 à 14, un lit dudit milieu particulaire étant contenu à l'intérieur de ladite colonne.

17. Dispositif de séparation d'un ou plusieurs analytes l'un de l'autre dans un liquide, ledit dispositif comprenant une entrée ou un collecteur d'entrée en communication fluidique avec ledit liquide ;
une pompe ;
une colonne de chromatographie (101 ; 301 ; 401) selon l'une quelconque des revendications 1 à 14 ; et
une sortie ou un collecteur de sortie.

Fig. 1

Fig. 2

Fig. 3

Fig. 4

Fig. 5

Fig. 6

Fig. 7

**EP 2 081 659 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4537217 A
- US 5354460 A
- US 20020166816 A
- WO 2005009585 A
- US 6524484 B
- US 20020125181 A